# FASCICULE DE BREVET EUROPEEN

(11) **EP 0 426 538 B1**
(45) Date de publication et mention de la délivrance du brevet: **30.11.1994**
(21) Numéro de dépôt: 90403020.2
(22) Date de dépôt: 26.10.1990
(51) Int. Cl.: H01H 25/06, B60Q 1/00, B60R 16/00

(54) **Commutateur électrique pour la commande combinée des feux d'éclairage et d'au moins un feu anti-brouillard arrière d'un véhicule automobile**
Elektrischer Schalter für die kombinierte Betätigung der Scheinwerfer und zumindest einer Nebelschlussleuchte eines Kraftfahrzeugs
Electric switch for the combined actuation of the headlight and at least of a rear fog lamp of a motor vehicle

(30) Priorité: 02.11.1989 FR 8914348
(43) Date de publication de la demande: 08.05.1991
(73) Titulaire: VALEO ELECTRONIQUE, 94000 Creteil (FR)
(72) Inventeur: Chrétien, Louis, F-92500 Rueil-Malmaison (FR)
(74) Mandataire: Gamonal, Didier

(56) Documents cités:
- DE-B- 2 531 696
- DE-B- 2 631 144
- DE-C- 3 834 390

## Description

La présente concerne un commutateur électrique, pour la commande combinée des feux principaux d'éclairage et des feux anti-brouillard avant et arrière d'un véhicule automobile, du genre comportant un sélecteur d'éclairage des feux principaux à positions dites arrêt-ville-route, monté rotatif dans un boîtier, un sélecteur d'éclairage d'au moins un feu anti-brouillard arrière, et un sélecteur d'éclairage d'au moins un feu antibrouillard avant.

Usuellement un véhicule automobile comporte deux feux (ou projecteurs) anti-brouillard avant et au moins un feu (ou projecteur) anti-brouillard arrière.

La législation européenne réglemente l'utilisation des feux anti-brouillard. Ainsi, lorsque le véhicule est équipé seulement d'au moins un feu antibrouillard arrière, son utilisation n'est autorisée que lorsque le sélecteur d'éclairage des feux principaux est en position route (code ou phare).

Lorsque le véhicule est équipé à la fois de feux anti-brouillard avant et arrière, l'usage du feu antibrouillard avant est autorisé lorsque le sélecteur d'éclairage des feux principaux est en position ville (lanternes) ou en position route (code/phare), l'usage du feu anti-brouillard arrière n'est autorisé comme précédemment, que lorsque le sélecteur d'éclairage des feux principaux est en position route ainsi que lorsque le feu anti-brouillard avant est allumé.

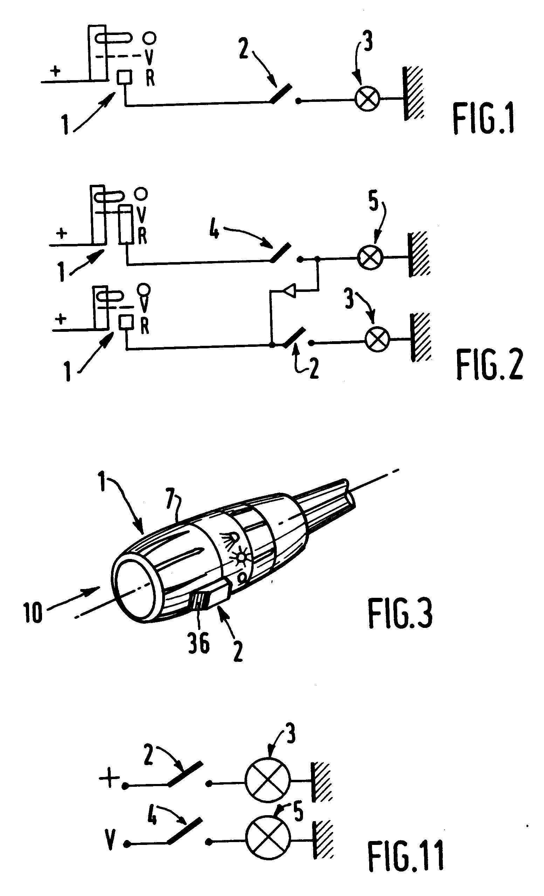

Les schémas des figures 1 et 2 permettent de satisfaire aux exigences de la législation.

Dans celles-ci on a représenté de façon schématique en 1 le sélecteur d'éclairage avec ses trois positions O (arrêt), V (ville), R (route).

La référence 2 représente le sélecteur du feu anti-brouillard arrière et la référence 4 le sélecteur du feu anti-brouillard avant, les références 3 et 5 désignant respectivement le feu anti-brouillard arrière et le feu anti-brouillard avant.

Dans le document DE-B-26 31 144, conforme au préambule de la revendication 1, le commutateur comporte un arbre de commande avec une portion dotée de deux rainures axiales diamétralement opposées pour coopérer avec des billes d'indexage, que présente le commutateur pour détermination des positions arrêt-ville-route du sélecteur d'éclairage principal.

Des rainures circonférentielles sont prévues à l'intérieur des rainures axiales afin d'autoriser une commande d'au moins un feu anti-brouillard.

De tels dispositifs présentent un inconvénient. En effet si le conducteur, par oubli, laisse le sélecteur d'éclairage du feu anti-brouillard arrière dans la position de commande, puis ultérieurement fait usage des codes ou des phares, le feu anti-brouillard arrière s'allume en infraction avec la réglementation dans le cas où il n'y a pas de brouillard.

Pour pallier cet inconvénient on pourrait songer à utiliser des relais manoeuvrant des butées escamotables, pour réinitialiser la commande du feu antibrouillard arrière.

Une telle disposition conduirait à compliquer le commutateur. En outre la réinitialisation des feux anti-brouillard arrière à partir des feux anti-brouillard avant est difficilement envisageable.

La présente invention a pour objet de pallier ces inconvénients et donc de créer une nouvelle disposition qui, de manière simple et économique, permette de réinitialiser la commande du feu anti-brouillard arrière dans toutes les configurations où son usage est autorisé.

Suivant l'invention un commutateur du type susindiqué est défini dans la revendication 1.

Grâce à l'invention une réinitialisation mécanique de la commande du feu anti-brouillard arrière est obtenue, en sorte que les oublis du conducteur sont corrigés.

En outre (figure 11) il devient possible d'alimenter directement le feu anti-brouillard arrière par le source de tension et avantageusement les feux anti-brouillard avant sont alimentés à partir des lanternes du véhicule.

Grâce à cela les pertes de courant sont diminuées et les liaisons électriques sont simplifiées, le liaison électrique entre les feux anti-brouillard avant et arrière n'étant plus nécessaire.

Les contacts du sélecteur d'éclairage des feux principaux sont moins sollicités.

Il résulte de tout cela que la fiabilité du commutateur est améliorée, de manière simple et économique.

De plus il devient possible de satisfaire de manière simple aux exigences de la réglementation européenne, la saillie du sélecteur des feux anti-brouillard avant déplaçant la pièce mobile ainsi que le curseur, lorsque partant de la position lanternes avec feux anti-brouillard avant et arrière enclenchés, l'on coupe les feux anti-brouillard avant.

Suivant une caractéristique possible ledit curseur est logé à l'intérieur du bouton que présente le sélecteur d'éclairage des feux principaux.

Grâce à cette disposition lorsque le commutateur appartient à une manette, on peut monter ledit curseur en bout de la manette à la place du bouton d'avertisseur sonore, le curseur portant alors une tige propre à coopérer avec une piste électrique disposée à l'intérieur d'un support sur lequel est montée à articulation ladite manette, ce qui diminue le nombre de fils du commutateur.

La description qui va suivre, illustre l'invention, à titre d'exemple, en référence aux dessins annexés dans lesquels :
- les figures 1 et 2 sont, sous forme simplifiée, des schémas classiques d'alimentation électrique respectivement des feux anti-brouillard arrière seul et des feux anti-brouillard arrière en combinaison avec les feux anti-brouillard avant ;
- la figure 3 est une vue schématique en perspective d'un commutateur selon l'invention pour un premier exemple de réalisation ;
- la figure 4 est une vue partielle en coupe axiale du commutateur de la figure 3 ;
- la figure 5 est une vue partielle développée montrant la pièce intermédiaire du commutateur selon l'invention ;
- la figure 6 est un synoptique des commandes ;
- la figure 7 est une vue montrant la position de la pièce intermédiaire pour les différentes positions du synoptique de la figure 6 ;
- les figures 8,9 et 10 sont des vues analogues respectivement aux figures 4,5 et 3 pour un second mode de réalisation ;
- la figure 11 est une vue analogue à la figure 2 réalisée grâce au commutateur selon la présente invention.

Le commutateur électrique pour la commande combinée des feux d'éclairage principaux, et des feux antibrouillard arrière et avant d'un véhicule automobile comporte un sélecteur d'éclairage 1 des feux principaux à positions dites arrêt-ville-route, dit ici par commodité sélecteur principal, ainsi qu'un sélecteur d'éclairage 2, d'au moins un feu anti-brouillard arrière, dit ici par commodité sélecteur BAR.

Le sélecteur principal 1 est monté rotatif dans un boîtier 11, et on supposera ici, par simplicité, que deux feux anti-brouillard arrière sont prévus.

Bien entendu le véhicule peut ne comporter qu'un feu anti-brouillard arrière associé à un feu de recul.

Dans les figures 3 à 7, le commutateur comporte également un sélecteur d'éclairage 4 d'au moins un feu anti-brouillard avant, dit ici par commodité, sélecteur BAV.

Ce sélecteur BAV est monté rotatif de manière coaxiale par rapport au selecteur principal 1. Ainsi l'axe de rotation du sélecteur BAV est confondu avec l'axe de rotation du sélecteur principal.

Dans la suite de la description on supposera que le véhicule comporte deux feux anti-brouillard avant étant entendu, par exemple dans le cas d'une moto, qu'un seul feu anti-brouillard avant peut exister.

On rappellera que le sélecteur principal 1 peut occuper trois positions, à savoir, la position O (Arrêt), la position V (Ville), la position R (Route).

En position O tous les feux principaux du véhicule sont éteints.

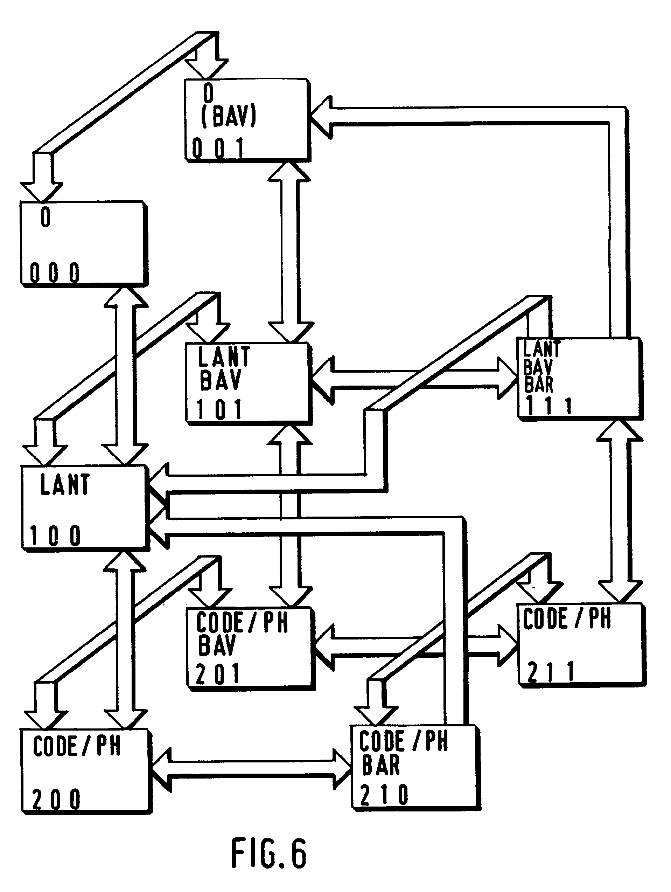

En position V les lanternes du véhicule sont allumées (dans la figure 6, cette position sera référencée par l'abréviation LANT).

En position R les codes ou les phares du véhicule sont allumés (dans la figure 6, cette position sera référencée par l'abréviation CODE/PH).

Le sélecteur BAR permet de commander ou non les feux auxiliaires anti-brouillard arrière (abréviation BAR à la figure 6).

Le sélecteur BAV permet de commander ou non les feux auxiliaires anti-brouillard avant (abréviation BAV à la figure 6).

Suivant l'invention le sélecteur principal 1 porte un curseur 35, d'une part, appartenant au sélecteur BAR 2 et, d'autre part, monté mobile en translation par rapport à l'axe de rotation dudit sélecteur principal, entre une position initiale et une position de commande pour lesquelles les feux antibrouillard arrière sont respectivement éteints et allumés.

Ledit curseur 35 porte une saillie 33 propre à coopérer avec des premiers moyens de rampes 60,52,70 portés par le boîtier 11 dudit sélecteur principal 1.

Le sélecteur BAV 4 porte également une saillie 40 propre à coopérer avec des seconds moyens de rampes 51 portés par ledit boîtier 11.

Une pièce intermédiaire mobile 50 porte en partie lesdits premiers et seconds moyens de rampes et est interposée entre, vu dans la direction de l'axe de rotation du sélecteur principal 1, lesdites saillies 33,40 du curseur 35 et du sélecteur BAV 4.

Ainsi par coopération de la saillie 33 du curseur 35 avec lesdits premiers moyens de rampes 60,52, le sélecteur BAR 2 du ou des feux anti-brouillard arrière est réinitialisée, lorsque le sélecteur principal 1 revient en position arrêt.

Ledit sélecteur BAR 2 est également réinitialisé, lorsque le sélecteur principal 1 étant en position ville, le sélecteur BAV 4 revient en position initiale.

Les premiers moyens de rampes 60,52,70 comportent au moins une partie fixe 60 solidaire du boîtier 11.

Dans les figures 3 à 7, le commutateur fait partie d'une manette 10 à la disposition du conducteur.

Cette manette (ici en matière plastique) sert également à la commande des feux indicateurs de direction et comporte un boîtier fixe 11 sous forme d'une enveloppe tubulaire.

Intérieurement cette enveloppe 11 comporte une douille 12 dotée d'un épaulement 13 transversal.

Sur cet épaulement 13 prend appui un ressort 14 pour sollicitation d'un plongeur 15 en direction de moyens de rampes 16 appartenant au sélecteur principal 1.

Cette douille 12 solidaire du boîtier 11, en étant éventuellement d'un seul tenant avec celui-ci, délimite avec ladite enveloppe 11 un logement 17 de guidage à translation pour ledit plongeur 15.

Le boîtier 11 porte en bout partiellement le sélecteur 1. Celui-ci comporte un bouton rotatif 7 creux, doté d'un nez 32 de forme tubulaire pénétrant à l'intérieur de la douille 12 en étant centré extérieurement par celle-ci.

Le nez 32 porte intérieurement à solidarisation un entraîneur 31 apte à entraîner des plots de contact (non visibles) propres à coopérer avec un circuit de connexion (non visible) pour l'alimentation, suivant la position du sélecteur 1, des lanternes, codes et phares du véhicule.

L'entraîneur 31 consiste ici en un manchon.

Le bouton 7 est doté intérieurement de moyens de rampes 26, avec lesquels est propre à coopérer un plongeur 25 porté par le sélecteur BAR 2.

A sa périphérie externe le bouton 7 présente une lumière 34 de guidage pour le curseur 35.

Ce curseur 35 présente une partie 36, formant un doigt cranté traversant la lumière 34 et s'étendant à l'extérieur du boîtier 11 et du bouton 7, pour être manoeuvré en translation par le conducteur.

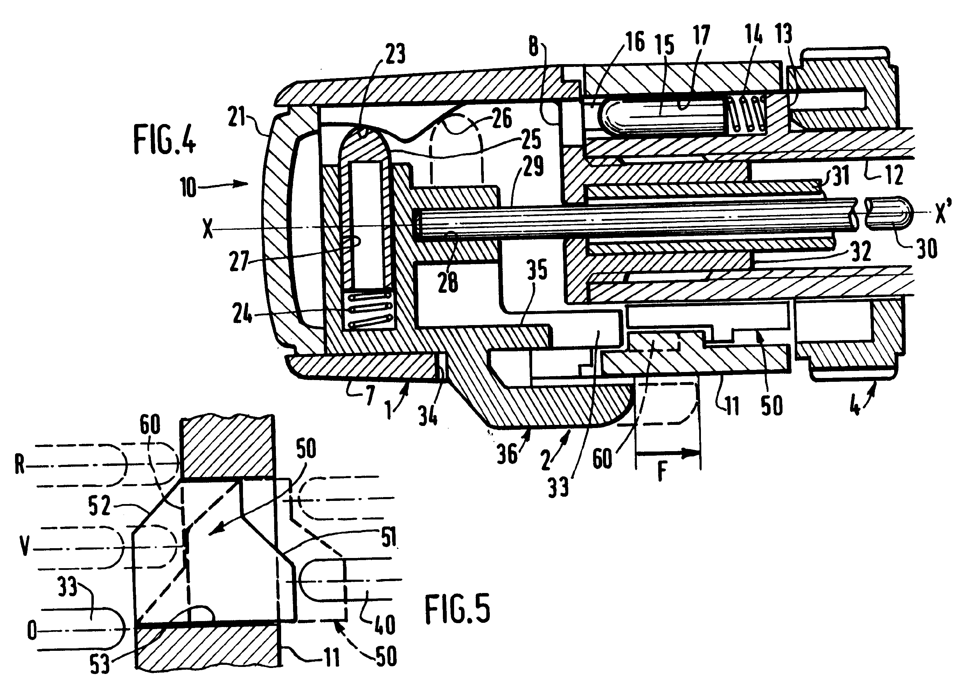

Le curseur 35 présente, d'une part, un trou borgne 27, à l'intérieur duquel coulisse à guidage le plongeur 25, sollicité par un ressort 24 s'appuyant sur le fond dudit trou 27. Ce trou 27 s'étend perpendiculairement à l'axe X-X′ de symétrie du boîtier 11 (voir figure 4) et au logement 17 parallèle audit axe.

Le curseur 35, avantageusement en matière plastique, présente également un trou borgne 28, s'étendant parallèlement audit axe X-X′, pour logement de l'extrémité d'une tige 29 portant à son autre extrémité un contact 30 pour établir des connexions et alimenter ou non les feux anti-brouillard arrière.

Avantageusement les connexions appartiennent au support, sur lequel est montée la manette.

La tige 29 est solidaire du curseur 35 en étant par exemple emmanchée à force dans le trou 28.

Elle traverse la paroi transversale 8, dont est solidaire le nez 32, ainsi que le manchon 31.

L'extrémité libre du bouton 7 est coiffée par un capuchon 21 formant un épaulement d'arrêt pour le curseur 35.

Les moyens de rampes 26 ont, en section, une forme de triangle et comportent une empreinte locale 23 avec laquelle coopère le plongeur 25 pour définition d'une position initiale stable.

La paroi 8 comporte les moyens de rampes 16 s'étendant circonférentiellement et axialement pour coopération avec le plongeur 15 d'orientation axiale.

L'enveloppe 11 est dotée intérieurement, localement d'une surépaisseur pour formation d'une rampe 60 fixe.

C'est avec cette rampe 60 qu'est propre à coopérer la saillie 33 du curseur 35.

La douille 12 porte du côté de la paroi 13 opposée au plongeur 15 le sélecteur BAV 4. Ce sélecteur sous forme de bouton rotatif molleté centré par la douille 12, comporte une saillie 40 (figure 5) propre à coopérer avec une pièce intermédiaire 50 mobile axialement.

Cette pièce 50 comporte sur ses deux faces latérales des moyens de rampes respectivement 51 et 52. Les moyens de rampes 51 appartiennent aux seconds moyens de rampes et sont propres à coopérer avec la saillie 40. Les moyens de rampes 52 appartiennent aux premiers moyens de rampes et sont propres à coopérer avec la saillie 33.

La pièce 50 est plus large à sa base inférieure (figure 5), la rampe 52 étant propre à recouvrir la rampe 60 pour certaines configurations, de manière décrite ci-après. La rampe 52 présente une portion supérieure inclinée et une portion basse verticale, tandis que la rampe 51 présente une portion supérieure verticale, une portion médiane inclinée et une portion inférieure verticale (figure 5).

La pièce intermédiaire 50 est guidée à translation par les bords d'une ouverture 53 délimitée partiellement par le boîtier 11 et par la douille 12, en étant portée par ledit boîtier 11.

Cette pièce 50 est donc interposée axialement entre les saillies 33 et 40, (ici sous forme de doigts) d'orientation axiale parallèle à l'axe X-X′.

Le bouton 4 est également indexé en position par un plongeur coopérant avec des moyens de rampes de manière analogues au plongeur 15 et 25, ledit plongeur pouvant être d'orientation axiale ou radiale.

Ce bouton 4 porte un plot propre à établir des connexions électriques.

Le sélecteur BAR (figure 11) est connecté directement à l'une des bornes de la source d'alimentation, ici la borne + de la batterie, le plot 30 étant donc admis à établir une connexion avec ladite borne, tandis que le plot associé au sélecteur 4 est propre à établir une connexion avec l'alimentation des lanternes du véhicule (position V).

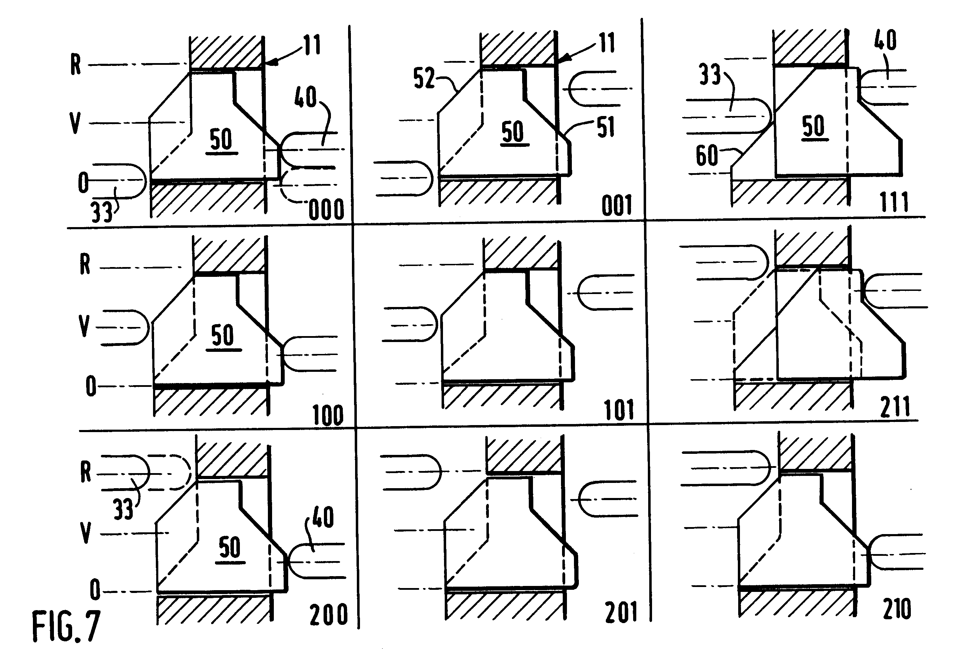

Le fonctionnement du commutateur s'effectue comme visible plus particulièrement dans les figures 6 et 7, dans lesquelles il apparaît pour chaque case un nombre de trois chiffres.

Le premier chiffre correspond à la position du sélecteur 1, sa valeur étant O pour la position O, 1 pour la position V ou LANT, 2 pour la position R ou CODE/PH.

Le deuxième chiffre est associé au sélecteur BAR, sa valeur étant soit O (sélecteur en position initiale) ou 1 (sélecteur en position de commande).

Le troisième chiffre est associé au sélecteur BAV, sa valeur étant comme précédemment soit O (sélecteur en position initiale) ou 1 (sélecteur en position de commande).

A chaque case correspond une position déterminée des sélecteurs 1,2 et 4, et les liaisons entre les cases avec double flèche sont possibles manuellement dans les deux sens, tandis que les liaisons avec une simple flèche sont possibles que dans un seul sens, le sélecteur BAR étant verrouillé dans un sens par les moyens de rampes 60,51,52.

Ainsi en considérant par exemple les cases 200 et 210, le passage d'une case à l'autre s'effectue de la manière suivante.

Pour la case 200, le bouton 7 est tourné dans la position R indexé par le plongeur 15, tandis le plongeur 25 et le curseur 35 sont dans leur position initiale (figure 4), tout comme le bouton 4, les feux anti-brouillard étant alors éteints.

A partir de cette position 200, il est possible de déplacer le curseur 35 par action sur le doigt 36, rien n'empêchant de translater la saillie 33.

La pièce 50 étant dans la position représentée à la figure 5, le doigt 33 est alors en face de la portion inclinée de la rampe 52.

Dans la case 210 le plongeur occupe la position représentée en pointillé à la figure 4 et rien n'empêche le conducteur de revenir à la case 200.

On notera que la pièce 50 est contrebutée par le doigt 40 et ne peut se déplacer en direction opposée de la saillie 33.

En considérant les cases O O 1 et O O O, la pièce intermédiaire 50 est également dans la position de la figure 5 et rien n'empêche de passer de la case O O O à la case 0 0 1 et vice-versa, la pièce 50 étant alors contrebutée par la saillie 33.

On notera que dans la position 0 0 1 les feux anti-brouillard avant ne sont pas alimentés bien que le sélecteur 4 soit en position de commande car les lanternes du véhicule ne sont pas alimentées.

En considérant les cases 111 et O O 1, on voit que toute rotation du bouton 7 entraîne une rotation du curseur 35 et donc que le doigt 33 est admis à coopérer avec la pente 60 pour retourner à sa position initiale, le plongeur 25 passant alors de la position en pointillé de la figure 4 à la position pleine.

On remarquera, suivant l'invention, lorsque le conducteur actionne le sélecteur BAV pour éteindre les feux anti-brouillard avant, que le doigt 40 par coopération avec les moyens de rampes 51, déplace la pièce mobile 50, laquelle déplace à son tour le curseur 35 qui revient ainsi à la position 1 0 0. La pièce 50 permet donc une réinitialisation du sélecteur BAR.

Lorsque l'on passe de la case 2 1 0 à la case 1 0 0, la pièce 50 est contrebutée par le doigt 40, et le doigt 33 parcourt la rampe 52 entraînant un retour du curseur 35 en position initiale, le plongeur 25 étant de nouveau en prise avec l'empreinte 23.

En considérant la figure 7, on voit, le sélecteur 1 étant en position V, qu'il est impossible de déplacer le curseur 35, du fait que le doigt 33 est en regard de la portion verticale de la rampe 52, sauf dans le cas où les feux anti-brouillard avant sont allumés, la pièce 50 se déplaçant de la case 1 0 1 à la case 1 1 1.

En position arrêt il est impossible de déplacer le curseur 35. Pour les autres configurations on se reportera aux figures 6 et 7.

Ainsi les moyens de rampes selon l'invention forment des moyens de verrouillage empêchant l'enclenchement des feux anti-brouillard arrière, lorsque le sélecteur 1 n'est pas en position code/phare et lorsque les feux anti-brouillard avant ne sont pas enclenchés.

Lorsque lesdits feux avant sont enclenchés, il est possible en position ville d'allumer les feux anti-brouillar arrière.

Les moyens de rampes permettent une réinitialisation des feux anti-brouillard arrière, lorsque le sélecteur principal revient à sa position arrêt, ou lorsque en position ville, feux anti-brouillard avant enclenchés, le sélecteur BAV revient en position initiale.

Comme visible sur la figure 7, la pièce 50 est mobile et recouvre dans certaines positions la rampe 60.

Bien entendu, il est possible de rendre fixe la pièce 50, lorsque le véhicule n'est pas équipé de feux anti-brouillard avant.

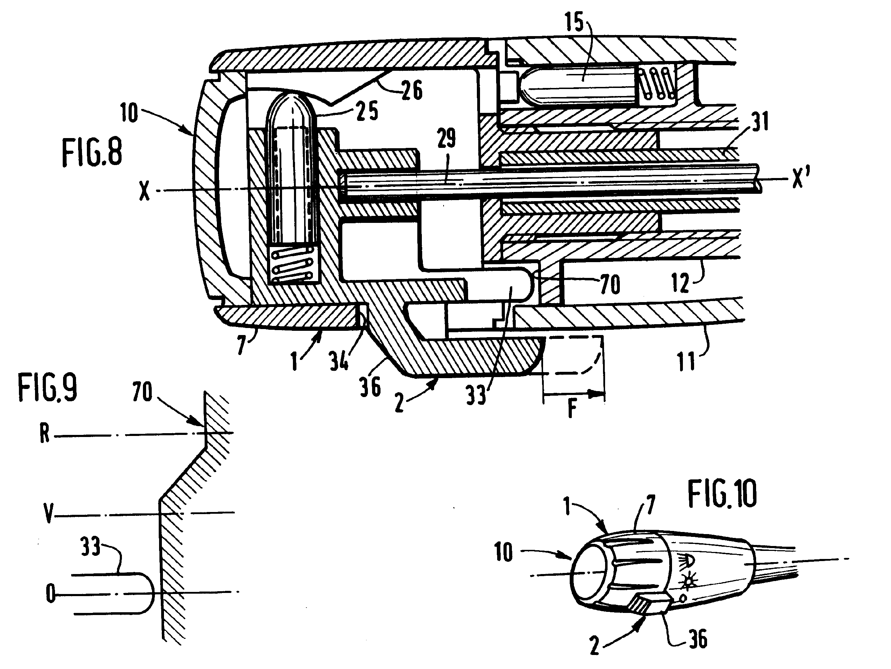

Ainsi dans le mode de réalisation des figures 8 à 10, le commutateur est identique au précédent à ceci près qu'il ne comporte pas de sélecteur 4.

Les moyens de rampes 70 sont fixes et sont portés ici par la douille 12.

En se reportant à la figure 9, on voit que l'on peut déplacer le bouton 36 uniquement que lorsque l'on est dans la position route.

Les moyens de rampes 70 comportent deux portions parallèles raccordées entre elles par une portion inclinée, l'une des portions étant associée à la position route, tandis que l'autre est associée aux positions 0 et V. Cela revient dans la figure 7 à rendre fixe la pièce 50.

Bien entendu la présente invention n'est pas limitée aux exemples de réalisation décrits, en particulier la pièce mobile 50 peut être montée sous légère précontrainte pour diminuer les bruits, des moyens élastiques étant, par exemple, interposés entre ladite pièce 50 et l'ouverture 53.

En outre les moyens de rampes 52 peuvent ne comporter qu'une portion verticale et une portion inclinée.

Le sélecteur BAV 4 peut comporter un organe d'actionnement mobile en translation et associé à un dispositif transformant le mouvement de translation dudit organe, en mouvement de rotation.

De même le curseur BAR peut comporter un organe d'actionnement mobile en rotation et associé à un dispositif transformant le mouvement de rotation en translation, le doigt 36 n'étant alors plus nécessaire.

## Revendications

1. Commutateur électrique pour la commande combinée des feux principaux d'éclairage et des feux anti-brouillard arrière et avant d'un véhicule automobile, du genre comportant un sélecteur d'éclairage (1) des feux principaux à positions dites respectivement arrêt-ville-route, dit ici par commodité sélecteur principal, monté rotatif dans un boîtier (11), un sélecteur d'éclairage d'au moins un feu anti-brouillard arrière (2), dit ici par commodité sélecteur BAR, et un sélecteur d'éclairage, d'au moins un feu anti-brouillard avant (4), dit ici par commodité sélecteur BAV, lesdits sélecteurs BAR (2) et BAV (4) pouvant occuper une position initiale et une position de commande pour lesquelles le ou les feux anti-brouillard concernés sont respectivement éteints et allumés, caractérisé en ce que le sélecteur BAR (2) comporte un curseur (35) porté par le sélecteur principal (1) et monté mobile en translation par rapport à l'axe de rotation dudit sélecteur principal (1) entre les deux positions du sélecteur BAR (2), en ce que ledit curseur (35) et ledit sélecteur BAV (4), ce dernier étant monté rotatif de manière coaxiale par rapport au sélecteur principal (1), portent chacun une saillie (33,40) propres à coopérer chacune respectivement avec des premiers moyens de rampes (60,52) et seconds moyens de rampes (51) portés au moins en partie par le boîtier (11) dudit sélecteur principal (1), et en ce qu'une pièce intermédiaire mobile (50), portant au moins en partie lesdits premiers et seconds moyens de rampes, est interposée entre, vu dans la direction de l'axe de rotation du sélecteur principal (1), lesdites saillies (40,33) desdits sélecteurs BAV (4) et BAR (2), en sorte que, par coopération de la saillie (33) du curseur (35) avec lesdits premiers moyens de rampes (60,52), ledit sélecteur BAR (2) est réinitialisé, lorsque le sélecteur principal (1) revient en position arrêt, et que ledit sélecteur BAR (2) est réinitialisé, lorsque le sélecteur principal (1) étant en position ville, ledit sélecteur BAV (4) revient en position initiale.

2. Commutateur selon la revendication 1, caractérisé en ce que ladite pièce intermédiaire (50) est guidée à translation par le boîtier (11) du sélecteur principal (1) et en ce que latéralement ladite pièce (50) présente une partie au moins desdits premiers et seconds moyens de rampes (52,51).

3. Commutateur selon la revendication 1 ou 2, caractérisé en ce que les premiers moyens de rampes (60,52) comportent une partie fixe (60) solidaire du boîtier (11) du sélecteur principal (1) et en ce que ladite pièce (50) est apte à recouvrir ladite partie fixe (60) des premiers moyens de rampes (60,52).

4. Commutateur selon la revendication 2 ou 3, caractérisé en ce que les moyens de rampes (51,52) que présente latéralement ladite pièce intermédiaire (50) comporte chacun au moins une partie verticale à laquelle se raccorde une partie inclinée et en ce que lesdites parties verticales sont parallèles entre elles, en sorte que ladite pièce (50) est plus large à l'une de ses bases.

5. Commutateur selon l'une quelconque des revendications 1 à 4, dans lequel le sélecteur principal (1) comporte un bouton creux (7), caractérisé en ce que ledit curseur (35) est logé à l'intérieur dudit bouton (7) et en ce qu'il comporte un doigt (36) traversant une lumière (34) pratiquée dans ledit bouton (7).

6. Commutateur selon la revendication 5, caractérisé en ce que ledit curseur (35) comporte un trou borgne (27) pour guidage et coulissement d'un plongeur (25) propre à coopérer avec des moyens de rampes (26) portés par ledit bouton (7).

7. Commutateur selon la revendication 5 ou 6, caractérisé en ce que le curseur (35) comporte un second trou borgne (28) pour montage d'une tige (29) associé à un plot de contact (30) et traversant une paroi transversale (8) que présente le bouton (7).

8. Commutateur selon l'une quelconque des revendications 5 à 7, caractérisé en ce que le bouton (7) présente un nez (32) lié à un entraîneur (31) et en ce que ledit nez (32) est guidé par une douille (12) solidaire du boîtier (11).

9. Commutateur selon l'une quelconque des revendications 1 à 8, caractérisé en ce que le sélecteur BAV (4) comporte un bouton rotatif indexé par l'intermédiaire d'un plongeur coopérant avec des moyens de rampes.

10. Commutateur selon l'une quelconque des revendications précédentes, caractérisé en ce que lesdites saillies (33,40) des sélecteurs BAR (2) et BAV (4) consistent en des doigts d'orientation axiale.

## Patentansprüche

1. Elektrischer Schalter für die kombinierte Betätigung der Hauptscheinwerfer sowie der Nebelschlußleuchten und der Nebelscheinwerfer eines Kraftfahrzeugs, bestehend aus einem Beleuchtungswählschalter (1) für die Hauptscheinwerfer mit den Positionen 'Aus-Stadtlicht-Abblendlicht/Fernlicht', hier der Einfachheit halber als Hauptwählschalter bezeichnet, der drehbar in einem Gehäuse (11) eingebaut ist, einem Beleuchtungswählschalter für zumindest eine Nebelschlußleuchte (2), hier der Einfachheit halber als Nebelschlußleuchtenschalter bezeichnet, und einem Beleuchtungswählschalter für zumindest einen Nebelscheinwerfer (4), hier der Einfachheit halber als Nebelscheinwerferschalter bezeichnet, wobei der Nebelschlußleuchtenschalter (2) und der Nebelscheinwerferschalter (4) eine Ausgangsposition und eine Betätigungsposition einnehmen können, in welcher die Nebelschlußleuchte und der Nebelscheinwerfer ausgeschaltet bzw. eingeschaltet sind, **dadurch gekennzeichnet**, daß der Nebelschlußleuchtenschalter (2) einen am Hauptwählschalter (1) angebrachten Schieber (35) umfaßt, der im Verhältnis zum Hauptwählschalter (1) geradlinig beweglich zwischen den beiden Positionen des Nebelschlußleuchtenschalters (2) angeordnet ist, daß der Schieber (35) und der Nebelscheinwerferschalter (4), der im Verhältnis zum Hauptwählschalter (1) koaxial drehbar eingebaut ist, jeweils einen Vorsprung (33, 40) aufweisen, von denen jeder mit ersten Rampenmitteln (60, 52) bzw. zweiten Rampenmitteln (51) zusammenwirken kann, welche zumindest teilweise am Gehäuse (11) des Hauptwählschalters (1) angebracht sind, und daß ein bewegliches Zwischenstück (50), das zumindest teilweise die ersten und zweiten Rampenmittel trägt, - in Richtung der Drehachse des Hauptwählschalters (1) gesehen - zwischen den besagten Vorsprüngen (40, 33) des Nebelschlußleuchtenschalters (4) und des Nebelscheinwerferschalters (2) eingesetzt ist, so daß durch Zusammenwirken des Vorsprungs (33) des Schiebers (35) mit den ersten Rampenmitteln (69, 52) der Nebelschlußleuchtenschalter (2) reinitialisiert wird, wenn der Hauptwählschalter (1) in die Position 'Aus' zurückkehrt, und daß der Nebelschlußleuchtenschalter (2) reinitialisiert wird, wenn sich der Hauptwählschalter (1) in der Position 'Stadtlicht' befindet und der Nebelscheinwerferschalter (4) in die Ausgangsposition zurückkehrt.

2. Schalter nach Anspruch 1 , **dadurch gekennzeichnet**, daß das Zwischenstück (50) durch das Gehäuse (11) des Hauptwählschalters (1) geradlinig geführt wird und daß dieses Zwischenstück (50) seitlich zumindest einen Teil der ersten und zweiten Rampenmittel (52, 51) aufweist.

3. Schalter nach Anspruch 1 oder 2 , **dadurch gekennzeichnet**, daß die ersten Rampenmittel (60, 52) einen feststehenden Teil (60) umfassen, der fest mit dem Gehäuse (11) des Hauptwählschalters (1) verbunden ist, und daß das Zwischenstück (50) diesen feststehenden Teil (60) der ersten Rampenmittel (60, 52) überdecken kann.

4. Schalter nach Anspruch 2 oder 3 , **dadurch** **gekennzeichnet,** daß die Rampenmittel (51, 52), die das Zwischenstück (50) seitlich aufweist, jeweils zumindest einen vertikalen Teil umfassen, an den sich ein abgeschrägter Teil anschließt, und daß die besagten vertikalen Teile parallel zueinander verlaufen, so daß das Zwischenstück (50) an einer seiner Grundflächen breiter ist.

5. Schalter nach einem der Ansprüche 1 bis 4, bei dem der Hauptwählschalter (1) einen hohlen Knopf (7) umfaßt , **dadurch gekennzeichnet**, daß der Schieber (35) im Innern dieses Knopfes (7) angeordnet ist und daß er einen Finger (36) umfaßt, der durch einen in diesem Knopf (7) vorgesehenen Schlitz (34) hindurchgeht.

6. Schalter nach Anspruch 5 , **dadurch gekennzeichnet**, daß der Schieber (35) ein Blindloch (27) für die gleitende Führung eines Stößels (25) umfaßt, der mit Rampenmitteln (26) zusammenwirken kann, die an dem Knopf (7) angebracht sind.

7. Schalter nach Anspruch 5 oder 6, **dadurch** **gekennzeichnet**, daß der Schieber (35) ein zweites Blindloch (28) für den Einbau einer Stange (29) umfaßt, die mit einem Kontaktstift (30) verbunden ist und die durch eine Querwand (8) hindurchgeht, die der Knopf (7) aufweist.

8. Schalter nach einem der Ansprüche 5 bis 7 , **dadurch** **gekennzeichnet**, daß der Knopf (7) eine Nase (32) aufweist, die mit einem Mitnehmer (31) verbunden ist, und daß diese Nase (32) durch eine fest mit dem Gehäuse (11) verbundene Hülse (12) geführt wird.

9. Schalter nach einem der Ansprüche 1 bis 8 , **dadurch** **gekennzeichnet**, daß der Nebelscheinwerferschalter (4) einen Drehknopf aufweist, der über einen mit Rampenmitteln zusammenwirkenden Stößel verrastet ist.

10. Schalter nach einem der vorangehenden Ansprüche, **dadurch gekennzeichnet**, daß die Vorsprünge (33, 40) des Nebelschlußleuchtenschalters (2) und des Nebelscheinwerferschalters (4) aus axial ausgerichteten Fingern bestehen.

## Claims

1. An electric switch for the combined operation of the main lighting lamps and the rear and front fog lamps of a motor vehicle, of the type comprising a lighting selector (1) for the main lamps in positions known respectively as off/side/head, which here is called the main selector for convenience, rotatably mounted in a housing (11), a lighting selector for at least one rear fog lamp (2), here called the BAR selector for convenience, and a lighting selector, for at least one front fog lamp (4), here called the BAV selector for convenience, the said BAR (2) and BAV (4) selectors being able to occupy an initial position and an operating position for which the fog lamp(s) concerned are respectively switched off and on,
**characterised in that** the BAR selector (2) comprises a cursor (35) borne by the main selector (1) and mounted in a freely displaceable manner in relation to the axis of rotation of said main selector (1) between the two positions of the BAR selector (2),
**in that** the said cursor (35) and the said BAV selector (4), the latter being rotatably mounted in coaxial manner in relation to the main selector (1), each bear a protrusion (33, 40) for cooperating respectively with first ramp means (60, 52) and second ramp means (51) borne at least partly by the housing (11) of the said main selector (1),
**and in that** a mobile intermediate piece (50), bearing at least partly said first and second ramp means, is interposed between, seen in the direction of the axis of rotation of the main selector (1), the said protrusions (40, 33) of said BAV (4) and BAR (2) selectors, so that, by the protrusion (33) of cursor (35) cooperating with the said first ramp means (60, 52), the said BAR selector (2) is reinitialised, when the main selector (1) returns to the off position, and said BAR selector (2) is reinitialised when, the main selector (1) being in the side position, the said BAV selector (4) returns to the initial position.

2. A switch according to Claim 1,
**characterised in that** the said intermediate piece (50) is displaceably guided by the housing (11) of the main selector (1),
**and in that** laterally the said piece (50) has one part at least of said first and second ramp means (52, 51).

3. A switch according to Claim 1 or 2,
**characterised in that** the first ramp means (60, 52) comprise a fixed part (60) integral with the housing (11) of the main selector (1),
**and in that** the said piece (50) is suitable for covering the said fixed part (60) of the first ramp means (60, 52).

4. A switch according to Claim 2 or 3,
**characterised in that** the ramp means (51, 52), which the said intermediate piece (50) laterally has, each comprise at least one vertical part to which an inclined part is connected,
**and in that** the said vertical parts are mutually parallel, so that said piece (50) is wider than one of its bases.

5. A switch according to any one of Claims 1 to 4, in which the main selector (1) comprises a hollow button (7),
**characterised in that** the said cursor (35) is housed inside said button (7),
**and in that** it comprises a finger (36) passing through a slot (34) provided in said button (7).

6. A switch according to Claim 5,
**characterised in that** said cursor (35) comprises a blind hole (27) for guiding and sliding a plunger (25) designed to cooperate with ramp means (26) borne by said button (7).

7. A switch according to Claim 5 or 6,
**characterised in that** the cursor (35) comprises a second blind hole (28) for mounting a rod (29) associated with a contact block (30) and passing through a transversal wall (8) of the button (7).

8. A switch according to any one of Claims 5 to 7,
**characterised in that** the button (7) has a nose (32) connected to a carrier (31),
**and in that** the said nose (32) is guided by a bushing (12) integral with the housing (11).

9. A switch according to any one of Claims 1 to 8,
**characterised in that** the BAV selector (4) comprises a rotating button indexed by means of a plunger cooperating with ramp means.

10. A switch according to any one of the preceding Claims,
**characterised in that** the said protrusions (33, 40) of the BAR (2) and BAV (4) selectors consist of axial orientation fingers.
